# EUROPEAN PATENT SPECIFICATION

(11) **EP 1 511 333 B1**
(45) Date of publication and mention of the grant of the patent: **17.09.2008**
(21) Application number: 03292144.7
(22) Date of filing: 29.08.2003
(51) Int. Cl.: H04Q 7/22

(54) **Fast delivery of multimedia messages in cellular networks**
Schnelle Ablieferung von multimedialen Nachrichten in zellularen Netzwerken
Transmission rapide de messages multimédia dans un réseau cellulaire

(43) Date of publication of application: 02.03.2005
(73) Proprietor: Alcatel Lucent, 75008 Paris (FR)
(72) Inventor: Kumar, Vinod, 75005 Paris (FR); Coupechoux, Marceau, 75005 Paris (FR)
(74) Representative: Kugler, Hermann

(56) References cited:
- EP-A- 1 175 025
- WO-A-98/32242
- WO-A-98/56206
- US-A- 5 940 774
- US-A1- 2003 036 384

## Description

The present invention relates to the field of mobile cellular networks, and more specifically to a method for the delivery of multimedia messages to a mobile station.

Wireless communication systems, for example mobile cellular telephony or private mobile radio communication systems, typically provide for radio telecommunication links to be arranged between a plurality of base stations and a plurality of subscriber units, often termed as mobile stations. The communication link from the base station to a mobile station is referred to as the down-link, and the communication link from a mobile station to the base station is referred to as the up-link.

Each Base Station has associated a particular geographical coverage area or cell, defined by a particular range where it can maintain acceptable communication with the mobile stations operating within its serving cell. Mobile stations are free to move between cells and are in controlled communication with, principally, only one base station at any one instance in time, and each mobile station is thus subject to a hand-off mechanism when the mobile station transitions a nominal boundary between adjacent sectors or cells.

Typically, wireless communications have lower levels of performance when the mobile stations are near the edge of a cell than when they are near the base station. Indeed, the performance of a wireless up-link/down-link communication tends to degrade while the mobile station approaches the edge of a cell, therefore, the radio link bit rate is then adapted according to the radio channel conditions by modifying the amount of redundancy in the channel codes. Around the coverage limits of the cells usually the coding scheme with maximum redundancy and hence lowest usable bit rate has to be used.

In future cellular networks, applications with different quality-of-service will be proposed to the user. In particular, delivery of some multimedia services like video streaming will require a high data rate on the down-link. Further, multimedia messages usually have a validity period, that is, the messages are removed from the database of the core network switching center in which they are stored if they cannot be delivered to the mobile station during the validity period.

For this kind of multimedia services the network infrastructure needs to determine the right moment when enough bandwidth is available to transmit the multimedia message to the mobile station. This condition is met when the down-link radio channel conditions are good, which is true for a mobile station near the base station. However, the down-link radio channel conditions can only be determined by the base station based on up-link messages, when the mobile station is in active mode, that is, engaged in a call.

International Patent WO 98/56206 discloses a method for delivering a message to a mobile station in which first the mobile station position is located by multicasting a location message from at least two selected base stations in the vicinity of the mobile station, and the mobile station transmitting a response message to a preferred base station. Then the other base stations in the vicinity of the mobile station are released and the preferred base station delivers the message intended to the mobile station.

A mobile station in active mode transmits regularly to the base station, whereas a mobile station in idle mode or non-active mode does not establish a transmission radio link which can be used for the base station to know when it is close enough so that to send the multimedia message, so the message cannot be sent.

Therefore, the object underlying the invention resides in removing the above drawbacks of the prior art.

The object is achieved, according to the invention, by a method for delivering a multimedia message to a mobile station in a cellular wireless environment according to claim 1. The object is also achieved by a base station control element according to claim 6 and a cellular wireless system according to claim 7.

The present invention is advantageously useful for improving the down-link data rates allocated to wireless multimedia message communications independent of the proximity of the mobile station to the base station and even to send the message in case the mobile station is in idle mode. Furthermore advantageous use of the current invention can be achieved in high density microcell wireless systems where microcells are deployed with high overlapping among them.

Advantageous configurations of the invention emerge from the dependent claims, the following- description and the drawings.

An embodiment example of the invention is now explained with the aid of Figures 1 to 3.

Figure 1 shows a diagram of a mobile cellular system.

Figure 2 illustrates a representative coverage diagram for a mobile cellular system with cell overlapping.

Figure 3 shows a preferred embodiment of the invention in a micro-cell cellular environment with high overlapping among cells.

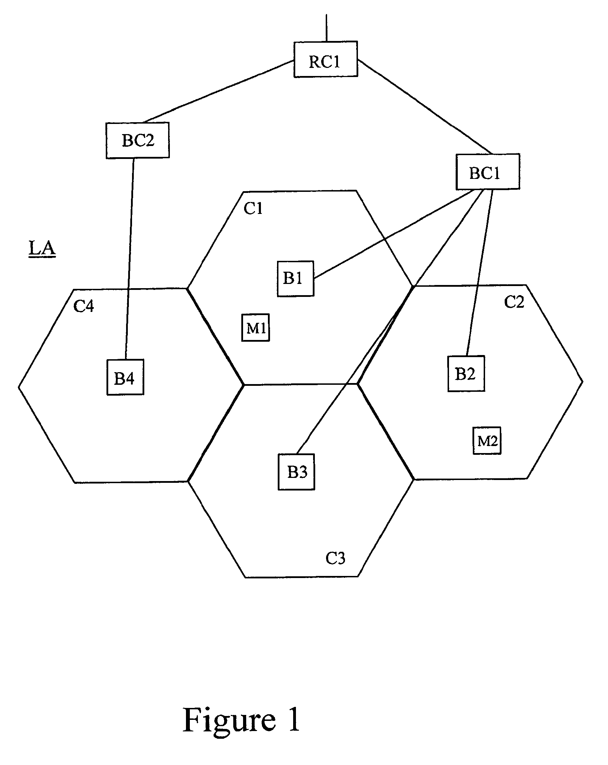

Figure 1 shows a typical cellular mobile radio system which comprises a number of base stations B1 to B4, each supporting a wireless communication with any of the mobile stations M1 to M2 which moves inside its geographical coverage area or cell C1 to C4 respectively. The plurality of adjoining cells C1 to C4, here conventionally represented in a hexagonal pattern, form a location area LA.

As it is well known in the art, a typical wireless system keeps track of the location of a mobile station by creating geographical areas called location areas LA. When a mobile station M1 or M2 moves between two location areas it performs a location area update procedure, that is, it informs the wireless communication system infrastructure of its new location area LA.

The mobile stations M1 and M2 have the ability to move across boundaries between cells C1 to C4. The mobile station continually monitors the signal received from the current cell on which it is camped, as well as the signals from neighboring cells. If a cell change is indicated, for example, because the signal from one of the neighboring cells is stronger than that of the current cell, or because of network conditions and priorities, cell reselection or handover is invoked.

As also shown in the example of the figure, transmission between the base stations B1 to B4 and any of the core network infrastructure switches RC1 is done through the base station control elements BC1 and BC2.

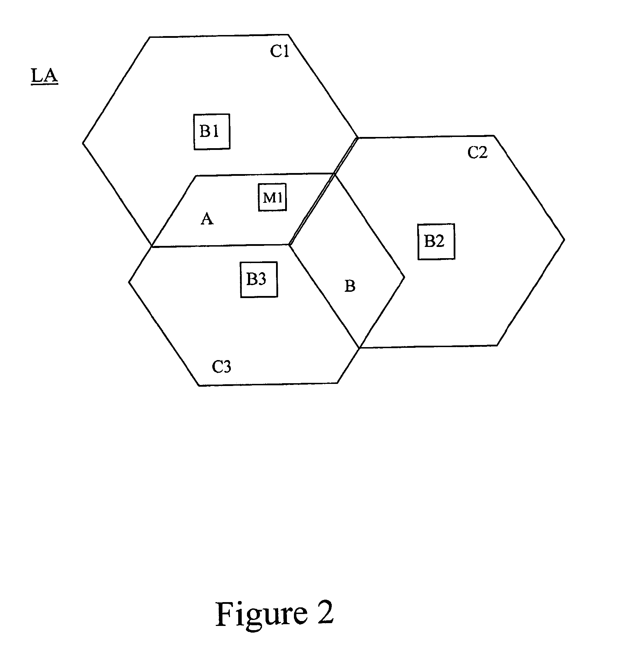

Figure 2 shows a coverage diagram for a mobile cellular system with three cells C1 to C3 which overlap in two geographical regions A and B. The cells C1 to C3 are served by base stations B1 to B3 which are roughly located in the center of said cells. A mobile station M1 is located in one of the overlapping regions A.

The figure is not drawn to scale but is merely intended to illustrate areas of coverage or cells and boundaries between those cells. The diagram includes a first cell C1 that shares a common boundary with adjacent cell C2 and a third cell C3 which covers a geographical area which overlaps the other two cells C1 and C2 in two overlapping regions A and B. A mobile station M1 is depicted as being located in overlapping region A and thus can be served by either of the base stations B1 or B3 which cover said area. Normally, the mobile station will establish transmission with the base station to which it initially has been attached, for example, the first base station B1, as long as he moves inside the coverage of said base station.

It is known in the art that the capacity of a cell is limited by the number of channels available. In less densely populated, e.g. rural areas, the size of the cell, which is determined to a large extent by the call concentration, is relatively large. On the other hand, in an area having a high density of mobile users, e.g. the business district of a large city, the call concentration is much greater and the cell size is relatively much smaller. Typically, microcells have only 200 or 500 meters range and often simply constitute a busy street, or part of a street, in which the density of calls is expected to be high. Further, in order to support such high density areas usually said microcells are arranged so that there is a substantial overlapping among them. So, the example shown in Figure 2 adapts well to a microcell mobile environment.

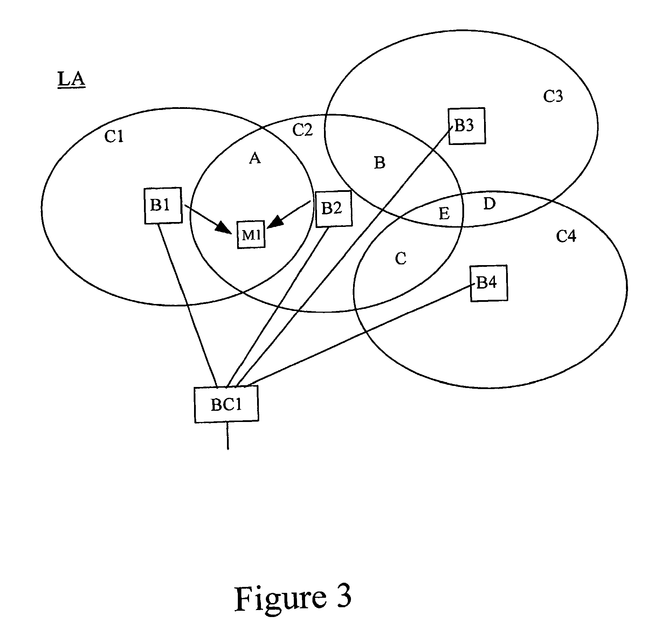

Figure 3 shows a preferred embodiment of the invention in a microcell mobile environment with substantial overlapping among cells. The figure shows a very similar scenario as the one seen in figure 2, where the microcells C1 to C4 overlap in some overlapping regions A to E. The base stations B1 to B4 provide wireless communication service to the mobile stations inside its coverage area or microcell and they are controlled by a base station control element BC1 which is connected to the core network infrastructure. In the example of the figure, a mobile station M1 has entered the location area LA formed by microcells C1 to C4 and it is located in the overlapping region A served by base stations B1 and B2. We assume in the example that the mobile station has been initially attached to the first base station B1.

According to the invention, as soon as a mobile station in idle mode enters the location area LA made up of these microcells, it sends a location area update message to the network infrastructure to inform about the new location area LA entered, and the network determines the base stations B1 and B2 whose cells are overlapping or likely to overlap the location of the mobile station M1 and which are capable of transmitting the multimedia information towards it.

To determine the set of base stations capable of transmitting the multimedia message towards the mobile station M1, three methods are possible: first, the multimedia message is sent by all neighbor cells of the cell where the mobile station has been attached; second, the mobile station M1 further sends its geographical location using a Global Positioning System (GPS) module so that the network can select the base stations neighboring said position; and third, in case of distributed base station systems, in which all distributed base stations having the same beacon receive the location area update message, all base stations receiving said location area update message are selected.

Once the base stations B1 and B2 have been selected, they will transmit the multimedia message to the mobile station M1 within their transmission range simultaneously.

Further, several transmission macro-diversity schemes (space-time coding, delay diversity, duplication...) can be also used to increase the bit rate on the down-link or to increase the signal-to-noise ratio at a given data rate. The multimedia message, which comes from the base station control element BC1 can, for example, be coded using a space-time code e.g. the Alamouti scheme, and in this case, each binary string produced by the encoder is sent by the base station control element BC1 to the different base stations B1 and B2 in charge of transmitting the multimedia message. In this case, synchronization of these BS may be required. Synchronization can be done by the base station control element BC1 or achieved in a different way, e.g. by using a Global Positioning System clock such as GPS or GALILEO.

Although the example of the figure has been applied for a mobile station M1 located in an overlapping region A, it is understood that the method can be applied also to a mobile station M1 moving into the other regions B to E. For example, in case of a mobile station M1 entering the location area LA and placed in overlapping region E, the wireless system, according to the invention, would select base stations B2, B3 and B4 for the simultaneous transmission of a multimedia message addressed to said mobile station M1.

## Claims

1. A method for delivering a multimedia message to a mobile station (M1) in a cellular wireless environment, said environment including a plurality of base stations (B1 to B4) whose cell coverage (C1 to C4) overlaps in determined overlapping regions (A to E) and form a location area (LA), and a base station control element (BC1) in charge of transmitting said multimedia message from a core network switching element (RC1) to said base stations (B1 to B4), the method **characterized by**
waiting for reception of a location update message from the mobile station (M1) when entering said location area (LA), and
when said location update message is received, selecting base stations (B1,B2) whose cells (C1,C2) are likely to overlap the region (A) where the mobile station (M1) is located and co-ordinating said base stations to simultaneously transmit the multimedia message to said mobile station.

2. The method of claim 1 **characterized by** selecting the base station (B1) to which the mobile station (M1) has been initially attached and all neighbour cell base stations (B2).

3. The method of claim 1, **characterized by** the mobile station (M1) further sending its geographical location using a GPS module, and the network selecting the base stations (B1, B2) whose cells (C1, C2) neighbour said position.

4. The method of claim 1, **characterized by** selecting the base stations (B1, B2) which receive the location area update message from the mobile station (M1).

5. The method of claim 1, **characterized in that** the multimedia message is coded in the base station control element (BC1) according to a space-time code.

6. A base station control element (BC1) for transmitting a multimedia message from a core network switching element (RC1) to a plurality of base stations (B1 to B4) in a cellular wireless system, arranged in microcells (C1 to C4) with substantial overlapping among them and forming a determined location area (LA), **characterized in that** it comprises means for selecting a determined set of base stations (B1, B2) whose cells (C1,C2) are likely to overlap a region (A) where a mobile station (M1) is located; means for receiving a location update indication; and means for sending, upon reception of said location update indication, the multimedia message to said set of base stations in a coded manner and co-ordinating the simultaneous transmission of said multimedia message via said set of base stations.

7. A cellular wireless system, arranged in microcells (C1 to C4) with substantial overlapping among them and forming a determined location area (LA), **characterized in that** it comprises a base station control element (BC1) according to claim 6.

## Patentansprüche

1. Ein Verfahren zur Zustellung einer Multimedia-Nachricht an eine Mobilstation (M1) in einer zellulären drahtlosen Umgebung, wobei die besagte Umgebung eine Vielzahl von Basisstationen (B1 bis B4), deren Funkabdeckung (C1 bis C4) sich in bestimmten Überlappungsregionen (A bis E) überlappt und welche eine Location Area (LA) bilden, sowie ein Basisstation-Steuerelement (BC1), welches für die Übertragung der besagten Multimedia-Nachricht von einem Kernnetzwerk-Schaltelement (RC1) an die besagten Basisstationen (B1 bis B4) verantwortlich ist, umfasst, wobei das Verfahren **gekennzeichnet ist durch**
Warten auf den Empfang einer Location-Update-Nachricht von der Mobilstation (M1) bei Betreten der besagten Location Area (LA), und
nach Empfang der besagten Location-Update-Nachricht, Auswahl von Basisstationen (B1, B2), deren Zellen (C1, C2) eventuell die Region (A), in der sich die Mobilstation (M1) befindet, überlappen, und Koordinieren der besagten Basisstationen für die simultane Übertragung der Multimedia-Nachricht an die besagte Mobilstation.

2. Das Verfahren nach Anspruch 1, **gekennzeichnet durch** das Auswählen der Basisstation (B1), zu welcher die Mobilstation (M1) ursprünglich zugeordnet worden war, sowie aller Nachbarzellen-Basisstationen (B2).

3. Das Verfahren nach Anspruch 1, **dadurch gekennzeichnet, dass** die Mobilstation (M1) weiterhin ihre geografische Position über ein GPS-Modul sendet, und dass das Netzwerk die Basisstationen (B1, B2) auswählt, deren Zellen (C1, C2) an die besagte Position angrenzen.

4. Das Verfahren nach Anspruch 1, **gekennzeichnet durch** die Auswahl der Basisstationen (B1, B2), welche eine Location-Area-Update-Nachrlcht von der Mobilstation (M1) erhalten.

5. Das Verfahren nach Anspruch 1, **dadurch gekennzeichnet, dass** die Multimedia-Nachricht im Basisstation-Steuerelement (BC1) entsprechend einem Space-Time-Code codiert wird.

6. Ein Basisstation-Steuerelement (BC1) zur Übertragung einer Multimedia-Nachricht von einem Kernnetzwerk-Schaltelement (RC1) an eine Vielzahl von Basisstationen (B1 bis B4) in einem zellulären drahtlosen System, welches in Mikrozellen (C1 bis C4) angeordnet ist, die sich überlappen und eine bestimmte Location Area (LA) bilden, **dadurch gekennzeichnet, dass** es Mittel zur Auswahl einer vorbestimmten Gruppe von Basisstationen (B1, B2), deren Zellen (C1, C2) eventuell eine Region (A) in der sich eine Mobilstation (M1) befindet, überlappen, Mittel zum Empfangen einer Location Update-Angabe sowie Mittel zum Senden, nachdem die besagte Location Update-Angabe erhalten wurde, der Multimedia-Nachricht an die besagte Gruppe von Basisstationen in codiertem Modus und zum Koordinieren der simultanen Übertragung der besagten Multimedia-Nachricht über die besagte Gruppe von Basisstationen umfasst.

7. Ein zelluläres drahtloses System, welches in Mikrozellen (C1 bis C4) angeordnet ist, die sich überlappen und eine bestimmte Location Area (LA) bilden, **dadurch gekennzeichnet, dass** es ein Basisstation-Steuerelement (BC1) nach Anspruch 6 umfasst.

## Revendications

1. Procédé permettant de fournir un message multimédia à une station mobile (M1) dans un environnement cellulaire sans fil, ledit environnement comprenant une pluralité de stations de base (B1 à B4) dont la couverture cellulaire (C1 à C4) se chevauche dans des zones de chevauchement déterminées (A à E) et forme une zone de localisation (LA), et un élément de contrôle de station de base (BC1) chargé de transmettre ledit message multimédia d'un élément de commutation de réseau dorsal (RC 1) auxdites stations de base (B1 à B4), le procédé étant **caractérisé en ce que**
un message de mise à jour d'emplacement provenant de la station mobile (M1) est en attente de réception lors de l'entrée dans ladite zone de localisation (LA), et
si ledit message de mise à jour est reçu, les stations de base (B1, B2) dont les cellules (C1, C2) sont susceptibles de chevaucher la zone (A) où la station mobile (M1) est située sont sélectionnées et lesdites stations de base sont co-ordonnées pour transmettre simultanément le message multimédia à ladite station mobile.

2. Procédé selon la revendication 1 **caractérisé en ce que** la station de base (B1) à laquelle la station mobile (M1) a été reliée au départ et toutes les stations de base voisines des cellules (B2) ont été sélectionnées.

3. Procédé selon la revendication 1, **caractérisé en ce que** la station mobile (M1) envoie en outre son emplacement géographique en utilisant un module GPS, et le réseau sélectionne les stations de base (B1, B2) dont les cellules (C1, C2) sont voisines de ladite position.

4. Procédé selon la revendication 1, **caractérisé en ce que** les stations de base (B1, B2) qui reçoivent le message de mise à jour de la zone de localisation provenant de la station mobile (M1) sont sélectionnées.

5. Procédé selon la revendication 1, **caractérisé en ce que** le message multimédia est codé dans l'élément de contrôle de station de base (BC1) selon un code spaclo-temporel.

6. Elément de contrôle de station de base (BC1) permettant de transmettre un message multimédia d'un élément de commutation de réseau dorsal (RC1) à une pluralité de stations de base (B1 à B4) dans un système cellulaire sans fil, disposé dans des microcellules (C1 à C4) avec un chevauchement considérable entre elles et de former une zone de localisation déterminée (LA), **caractérisé en ce qu'**il comprend des moyens permettant de sélectionner un ensemble déterminé de stations de base (B1, B2) dont les cellules (C1, C2) sont susceptibles de chevaucher une zone (A) où une station mobile (M1) est située ; des moyens permettant de recevoir une indication de mise à jour d'emplacement; et des moyens permettant d'envoyer, lors de la réception de ladite indication de mise à jour d'emplacement, le message multimédia audit ensemble de stations de base d'une façon codée et de co-ordonner la transmission simultanée dudit message multimédia via ledit ensemble de stations de base.

7. Système cellulaire sans fil, disposé dans des microcellules (C1 à C4) avec un chevauchement considérable entre elles et formant une zone de localisation déterminée (LA), **caractérisé en ce qu'**il comprend un élément de contrôle de station de base (BC1) selon la revendication 6.
